# EUROPÄISCHE PATENTSCHRIFT

(11) **EP 1 123 187 B1**
(45) Veröffentlichungstag und Bekanntmachung des Hinweises auf die Patenterteilung: **04.12.2002**
(21) Anmeldenummer: 99970630.2
(22) Anmeldetag: 16.10.1999
(51) Int. Cl.: B29C 45/42, B23Q 1/58

(54) **U-FÖRMIGE PROFILSCHIENE ZUM AUFBAU EINES HANDHABUNGSGERÄTS**
U-SHAPED PROFILE RAIL FOR CONSTRUCTING A HANDLING DEVICE
RAIL PROFILE EN U POUR LE MONTAGE D'UN APPAREIL DE MANIPULATION

(30) Priorität: 20.10.1998 DE 19848333
(43) Veröffentlichungstag der Anmeldung: 16.08.2001
(73) Patentinhaber: Hehl, Karl, 72290 Lossburg (DE)
(72) Erfinder: Hehl, Karl, 72290 Lossburg (DE)
(74) Vertreter: Reinhardt, Harry
(86) Internationale Anmeldenummer: EP9907864
(87) Internationale Veröffentlichungsnummer: WO00023247

(56) Entgegenhaltungen:
- EP-A- 0 192 134
- EP-A- 0 536 493
- EP-A- 0 561 529
- DE-U- 29 805 775
- FR-A- 2 684 034

## Beschreibung

Die Erfindung betrifft eine U-förmige Profilschiene zum Aufbau eines Handhabungsgeräts zur Handhabung von auf einer Spritzgießmaschine zur Verarbeitung von Kunststoffen und anderen plastifizierbaren Massen wie keramischen Massen oder pulvrigen Massen hergestellten Teilen nach dem Oberbegriff des Anspruches 1.

Aus der EP 536 493 A2 sind Profilschienen in verschiedensten Ausführungsformen bekannt, die zwar U-förmig sind und dem Aufbau eines Handhabungsgerätes dienen. Dennoch haben alle dort offenbarten Profilschienen gemeinsam, dass die Führungen für die Antriebssysteme stets auf einer Grundplatte vormontiert werden, die dann am Grund des Profils befestigt wird. Die Schenkelenden werden nicht als Führung benutzt. Zudem wird das Profil nach Einbau der Antriebseinheit am offenen Ende des U zwischen den Schenkeln mit einer Abdeckung verschlossen, was das Profil aussteift. Die Führungen sind damit vom Profil unabhängig, was zusätzlichen Montageaufwand erfordert. Anschlußelemente in Form von Nuten sind vorhanden, allerdings nicht um zwei Profilschienen parallel zueinander zu koppeln, sondern um den einfachen Anschluß weiterer Profile zu ermöglichen, also um das Profil in sein Umfeld einzubinden, aber nicht um es zu versteifen.

Profilschienen werden z.B. in der DE 38 30 964 C2 eingesetzt, um daraus ein Handhabungsgerät für eine Spritzgießmaschine herzustellen. Ein derartiges 'Handling' dient dann dazu, die an einer Kunststoff-Spritzgießmaschine anfallenden Spritzteile und Angüsse aus dem Formhohlraum zu entnehmen und an eine andere Stelle zu überführen. Die Profilschiene hat die Form eines aufrecht stehenden C und ist mit unterschiedlichen Schenkellängen auf den Einheiten der Spritzgießmaschine abgestützt. Im Profil sind Führungen eingebaut, die insofern vom Profil selbst unabhängig sind. Eine weitergehende statische Funktion übernimmt dieses Profil nicht.

Es ist weiter bekannt Profile herzustellen, in die der Antrieb für ein Handhabungsgerät als auch ein Führungssystem integriert ist. Derartige Profile sind einerseits aufwendig, andererseits bereiten die meist nach dem Strangpreßverfahren hergestellten Profile aufgrund von Fertigungstoleranzen Schwierigkeiten im Hinblick auf die integrierten Führungssysteme.

Schließlich ist das Verschrauben von Profilen über Verbinder sowie das Vorsehen von Nutensteinführungen in Profilschienen z.B. gemäß DE 34 22 222 C2 bekannt.

Ausgehend von diesem Stand der Technik liegt der vorliegenden Erfindung die Aufgabe zugrunde, eine Profilschiene zu schaffen, die zur Aufnahme von Führungen so elastisch wie möglich ist, bedarfsweise jedoch auch so steif wie nötig ausgebildet werden kann.

Dies wird durch eine Profilschiene mit den Merkmalen des Anspruches 1 gelöst.

Die Profilschiene ist in sich selbst aufgrund der gezielten Anordnung von Hohlkammem und bedarfsweise auch oberflächigen Ausnehmungen vorzugsweise so elastisch ausgebildet, daß die Schenkelenden einer Querbewegung nur geringen elastischen Widerstand entgegensetzen. Die Elastizität zwischen Schenkel und Schenkelende reduziert damit die infolge der üblicherweise zu hohen Steifigkeit des Profils vorhandene Überbestimmung der Linearlagerungen der Führungen. Damit ist das Profil sowohl auf die Fertigungstoleranzen des Strangpreßverfahrens als auch auf die Minimierung der Belastung des Führungssystems abgestimmt, da mit wachsender Steifigkeit des Profils die im Führungssystem auftretenden Belastungen zunehmen würden. Die außen am Schenkelende liegende Führung kann zwar die Stützfunktion des Profilbodens nicht ausnutzen, ist aber leichter zugänglich, was den Montageaufwand verringert.

Vorzugsweise wird zwischen Schenkel und Schenkelende ein Materialgelenk ausgebildet, in dem eine erhöhte Elastizität gegeben ist. Es wird also unter den Führungen eine Art "Drehgelenke" ausgebildet, die den Führungen erlauben, sich gegensinnig auszurichten, um dadurch die Belastung des Führungssystems zu verringern.

Wenn eine entsprechende Steifigkeit in statischer Hinsicht erreicht werden muss, können die Profilschienen vorzugsweise über Verbinder raumsparend miteinander verbunden werden. Die Profilschienen kommen dabei unmittelbar aneinander zu liegen, wobei durch entsprechende Aussparungen sichergestellt ist, daß es nicht zu Überständen kommt.

Es zeigen:
- Fig. 1: Die Ansicht der Formschließeinheit einer Spritzgießmaschine mit daran angebautem Handhabungsgerät,
- Fig. 2: einen Schnitt durch die Profilschiene,
- Fig. 3: einen Schnitt durch zwei miteinander verbundene Profilschienen,
- Fig. 3a: eine Seitenansicht von Fig. 3,
- Fig. 4: zwei H-förmig miteinander verbundene Profilschienen,
- Fig. 4a: einen vergrößerten Ausschnitt von Fig. 4,
- Fig. 5,5a: einen Teleskopantrieb für einen Greiferarm in Seitenansicht und Stirnansicht,
- Fig. 6: einen weiteren Teleskopantrieb für einen Greiferarm in Seitenansicht,
- Fig. 7,7a: einen dritten Teleskopantrieb in Seitenansicht und Stirnansicht.

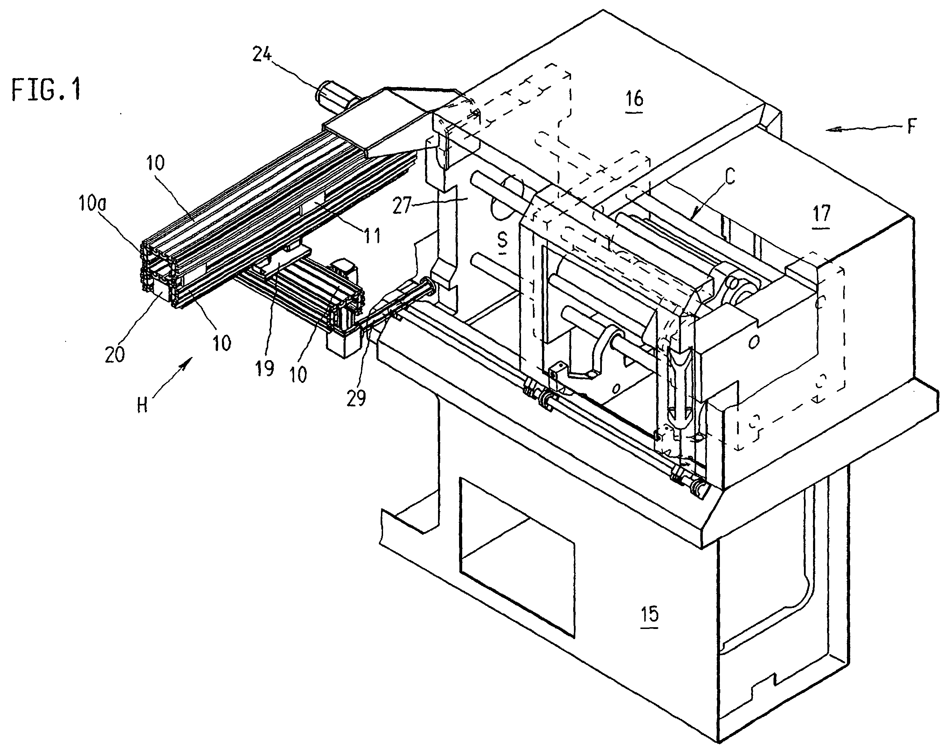

Fig. 1 zeigt die Formschließeinheit einer Spritzgießmaschine zur Verarbeitung von Kunststoffen und anderer plastifizierbarer Massen wie keramischer oder pulvriger Massen. Die Formschließeinheit F ist auf einem Maschinenfuß 15 angeordnet. Ein Schließmechanismus C zur Bewegung der Formhälften einer zeichnerisch nicht dargestellten Spritzgießform aufeinander zu und voneinander weg ist durch eine teilweise weggeschnittene Schutzabdeckung 17 abgedeckt. Der Formspannraum S selbst ist durch eine bewegliche Schutzabdeckung 16 abgedeckt. Die Bedienerseite befindet sich auf der vom Betrachter der Fig. 1 abgewandten Seite. Ein Handhabungsgerät H ist am Stationären Formträger 27 angebaut und wird über eine Antriebseinheit 24 betätigt. Das Handhabungsgerät H erstreckt sich vom Bediener weg.

Das Handhabungsgerät H besteht aus mehreren Profilschienen 10, die so aufgebaut sind, daß die Schenkel 10a dieser Profile sich nach unten erstrecken. In der unteren Profilschiene 10 der miteinander über Verbinder 11 verbundenen Profilschienen ist eine Antriebseinheit 20 zur Bewegung eines Schlittens 19 angeordnet, an dem seinerseits Profilschienen angeordnet sind, die einen Greiferarm 29 betätigen. Infolge der Bewegung der Antriebseinheiten 20,24 kann der Greifer in den Formspannraum S hinein und aus diesem heraus bewegt werden, um z.B. Spritzgießteile oder Angüsse zu entnehmen oder Einlegeteile einzulegen.

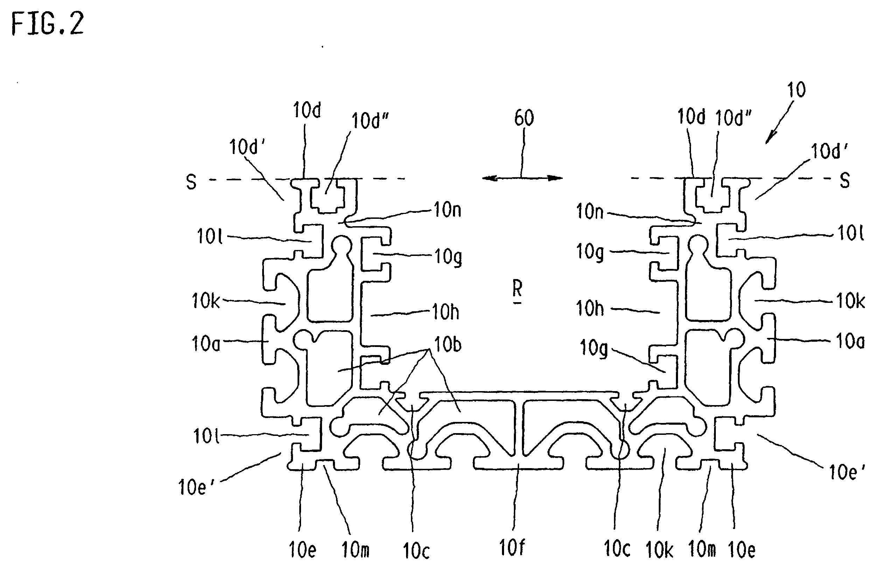

Der Aufhau der Profilschiene ergibt sich aus Fig. 2. Die Profilschiene 10 ist ein Hohlkammerprofil mit Hohlkammem 10b. Ergänzend können am Steg 10f, der die Schenkel 10a der Profilschiene 10 miteinander verbindet, Ausnehmungen 10c oberflächig an der Innenseite angeordnet sein. Das Profil ist vorzugsweise symmetrisch zu einer Mittellinie aufgebaut, was Herstellungs- und Lageraufwand verringert. Die Hohlkammem 10b und die oberflächigen Ausnehmungen 10c sind so angeordnet, daß zumindest die Schenkelenden 10d elastisch in Richtung des Pfeils 60 aufeinander zu und voneinander weg bewegbar sind. Die Profilschiene ist in sich selbst aufgrund der gezielten Anordnung von Hohlkammern und bedarfsweise auch oberflächigen Ausnehmungen vorzugsweise so elastisch ausgebildet, daß die Schenkelenden 10d einer Querbewegung nur geringen elastischen Widerstand entgegensetzen. Die Elastizität zwischen Schenkel 10a und Schenkelende 10d reduziert damit die infolge der üblicherweise zu hohen Steifigkeit des Profils vorhandene Überbestimmung der Linearlagerungen der Führungen. Vorzugsweise wird zwischen Schenkel 10a und Schenkelende 10d ein Materialgelenk 10n ausgebildet, in dem eine erhöhte Elastizität gegeben ist. Es wird also unter den Führungen 14 eine Art "Drehgelenke" ausgebildet, die den Führungen erlauben, sich gegensinnig auszurichten, um dadurch die Belastung des Führungssystems zu verringern.

Es versteht sich von selbst, daß zur Erzielung dieses Ergebnisses die Hohlkammem 10b und/oder die oberflächigen Ausnehmungen 10c beriebig angeordnet werden können. Durch die erzielte Elastizität lassen sich Führungen 14 zum Beispiel an den Schenkelenden 10d anordnen, ohne daß eine spanende Bearbeitung der Profilschiene 10 erforderlich ist. Dennoch kann ohne weitere Bearbeitung den Anforderungen des Führungssystems Genüge getan werden. Wird das Führungssystem auf diesen Führungen 14 betrieben, so geben die Schenkel 10a infolge ihrer Elastizität den jeweiligen Anforderungen nach, so daß das Führungssystem nicht über Gebühr durch die bei derartigen Profilen bestehenden Fertigungstoleranzen beansprucht wird. Trotz dieser Fertigungstoleranzen - einer Folge des günstigen Strangpreßverfahrens - können diese nun dennoch unverändert als Basis für ein Führungssystem eingesetzt werden. Die Ungenauigkeiten beim Strangpressen können sich somit weniger auf Verspannungen des Führungssystems auswirken.

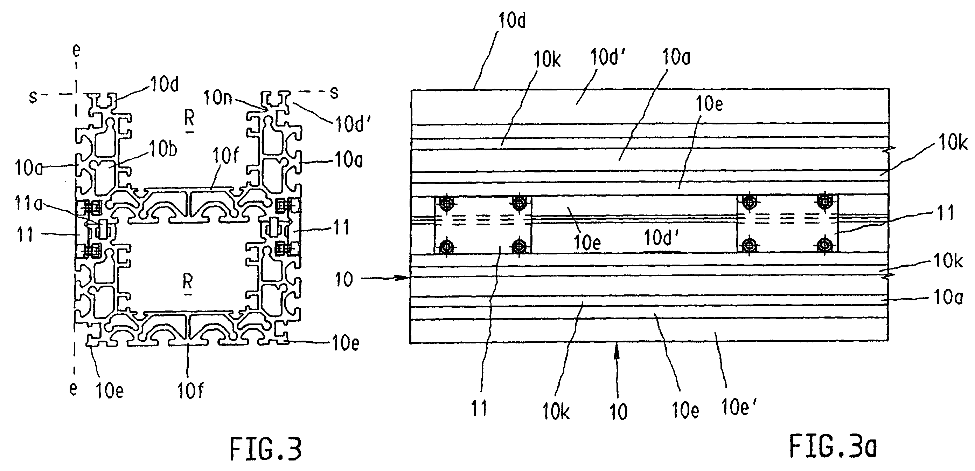

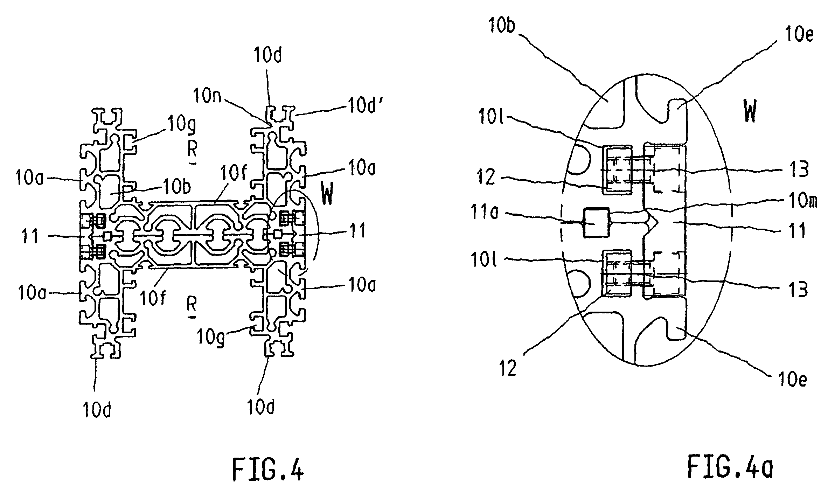

Außenseitig sind an der Profilschiene 10 sowohl an den Schenkelenden 10d als auch an den im Hinblick auf die U-Form unten liegenden Ecken 10e der Profilschiene 10 Aussparungen 10d',10e' vorgesehen. Diese Aussparungen dienen gemäß Fig. 3,4 zum Anschluß weiterer Profilschienen 10 mittels Verbinder 11. Die Verbinder 11 sind infolge der Anordnung dieser Aussparungen 10d',10e' parallel zur Ebene e-e der Schenkel 10a angeordnet und vorzugsweise flächengleich zu den Außenseiten der Schenkel 10a der miteinander verbundenen Profilschienen 10. Dadurch lassen sich in Richtung des Pfeils 60 elastische Profile einzeln oder mehrfach nebeneinander einsetzen. Werden mehrere Profilschienen 10 miteinander verbunden, ergibt sich eine erhöhte Stabilität.

Insbesondere wenn gemäß Fig. 3 unten ein geschlossenes Kammerprofil erreicht wird, ist eine beträchtliche Zunahme der Steifigkeit zu erzielen. Dadurch ist die Profilschiene 10 einerseits im elastischen Bereich verformbar und damit abgestimmt auf die Fertigungstoleranzen des Strangpreßverfahrens mit einer damit einhergehenden Minimierung der Belastung des Führungssystems, da mit wachsender Steifigkeit des Profils die im Führungssystem auftretenden Belastungen zunehmen, andererseits bedarfsweise steif auszubilden. Es ist also so elastisch wie möglich, kann aber gleichzeitig auch so steif wie nötig ausgebildet werden, indem bedarfsweise mehrere Profilschienen miteinander verbunden werden. Bei dieser Verbindung müssen im unmittelbaren Anlagebereich der Stege 10f keine Verbindungsmittel eingesetzt werden, was die Steifigkeit der Anordnung erhöht. Dennoch sind die Verbinder 11 flächengleich zu den Außenseiten angeordnet, so daß sich keinerlei Überstände in bezug auf die Hauptabmessungen der Profile ergeben. Zur Erhöhung der Querstabilität sind bei Verbindung von zwei Profilen Kulissen 11a in die Ausnehmung 11a und/oder die Aussparung 10d' der Profilschiene einlegbar.

Sowohl die Führungen 14 als auch die Verbinder 11 können ohne spanende Bearbeitung an der Profilschiene 10 angeordnet werden. Für die Führungen 14 sind an den Schenkelenden 10d Befestigungsmöglichkeiten 10d" vorgesehen. Die Führungen 14 können auch an anderen Teilen der Profilschiene 10 wie z.B. in den Befestigungsmöglichkeiten 10g,10k befestigt werden. Diese Befestigungsmöglichkeiten sind vorzugsweise Nutensteinführungen, jedoch können andere Befestigungsmöglichkeiten vorgesehen werden, wie z.B. eine Festlegung durch Nieten oder Schrauben. Ebenso sind für die Festlegung der Verbinder Befestigungsmöglichkeiten 10l sowohl im Bereich der Aussparung 10d' am Schenkelende 10d als auch im Bereich der Aussparung 10e' im Bereich der Ecke 10e vorgesehen. Selbstverständlich sind andere Befestigungsmöglichkeiten denkbar. Das Profil weist an seiner Außenseite weitere Befestigungsmöglichkeiten 10k auf, die je nach Einsatzzweck ausgenutzt werden können.

Zwischen den Schenkeln 10a im Innenraum R ist ausreichend Raum für die Aufnahme von Antriebseinheiten 20,21,22 zum Betrieb des Handhabungsgeräts H vorgesehen. Diese Antriebseinheiten können über z.B. als Nutensteinführungen ausgebildete Befestigungsmöglichkeiten 10g innerhalb der Profilschienen festgelegt werden. Eine Befestigung ist z.B. aber auch an den Ausnehmungen 10c möglich, die dann als Nutensteinführung dienen. Die Schenkel 10a sind so lang, daß die Antriebseinheiten 20,21 im Innenraum R unterhalb einer Ebene s-s angeordnet werden können, die durch die Schenkelenden 10d bestimmt ist. Die Antriebseinheiten 20,21,22 sind damit vor äußeren Einflüssen geschützt. Bei Bewegung der Profilschienen am Handhabungsgerät muß für die Bewegung der Antriebseinheiten kein zusätzlicher Freiraum für die bisher außerhalb der Profilschienen angeordneten Antriebe vorgehalten werden, so daß ein kompakterer Aufbau des Handhabungsgeräts möglich ist. Vor allem bei schnell bewegbaren Teleskopantrieben macht sich dieser Vorteil bemerkbar. Als Antriebe kommen alle Arten von Antriebseinheiten in Betracht, so können z.B. Zahnriemenantriebe, Spiridelantriebe, Linearmotoren, pneumatische oder hydraulische Antriebe eingesetzt werden.

Zwischen den Befestigungsmöglichkeiten 10g im Innenraum R ist ein Zwischenbereich 10h vorgesehen, der bedarfsweise für weitere Zwecke eingesetzt werden kann. Denkbar wäre hier zum Beispiel, diesen Zwischenbereich als Laufschiene für zusätzliche Elemente vorzusehen. Fig. 3 zeigt die äußerst steife Anordnung von zwei Profilschienen 10, die mit ihren Schenkelenden 10d nach oben zeigend miteinander verbunden sind. Das Vollkammerprofil im unteren Bereich erhöht erheblich die Steifigkeit. Gleichzeitig ist zu erkennen, daß die Verbinder 11 flächengleich mit den Außenseiten der Schenkel 10a angeordnet sind. Fig. 4 zeigt als weitere Möglichkeit die H-förmige Verbindung der beiden Profilschienen. Gemäß Fig. 4a, die einen Ausschnitt aus Fig. 4 vergrößert zeigt, wird der Verbinder 11 in den Nutensteinführungen der Befestigungsmöglichkeiten 10l über Nutensteine 12 gehalten, die über Befestigungsmittel 13 mit dem Verbinder 11 verbunden sind.

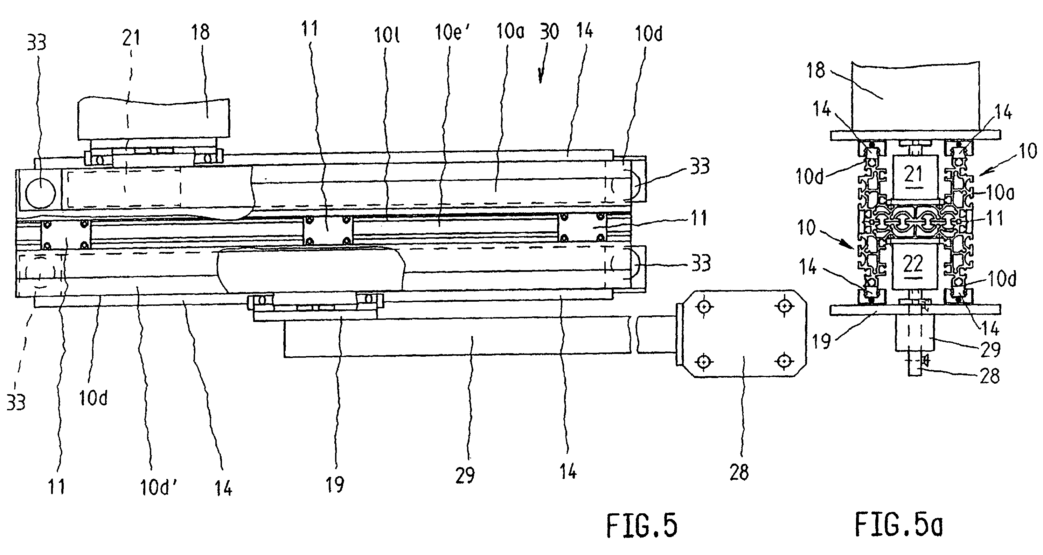

Gemäß Fig. 5, 6 und 7 läßt sich aus diesen Profilschienen 10 auf einfache und platzsparende Weise ein Teleskopantrieb aufbauen. Gemäß Fig. 5a sind bei den hier gegeneinander liegend angeordneten und damit in H-Form angeordneten Profilschienen 10 die Führungen 14 an den Schenkelenden 10d angeordnet. Auf diesen Führungen 14 läuft unten ein Schlitten 19, der in den Ausführungsbeispielen einen Greiferarm 29 mit Greifer 28 trägt. Die Führungen 14 sind symmetrisch zu einer im Innenraum der Profilschiene 10 angeordneten Antriebseinheit 21,22 oder zu deren Antriebsachse. Die in Fig. 5 nach links und rechts bewegbaren Profilschienen 10 sind mit einem stationären Element 18 in Form einer stationären Aufhängung verbunden. Die Antriebseinheiten 21,22 sind in der Seitenansicht nicht zu erkennen, da sie innerhalb der Profilschienen 10 angeordnet sind.

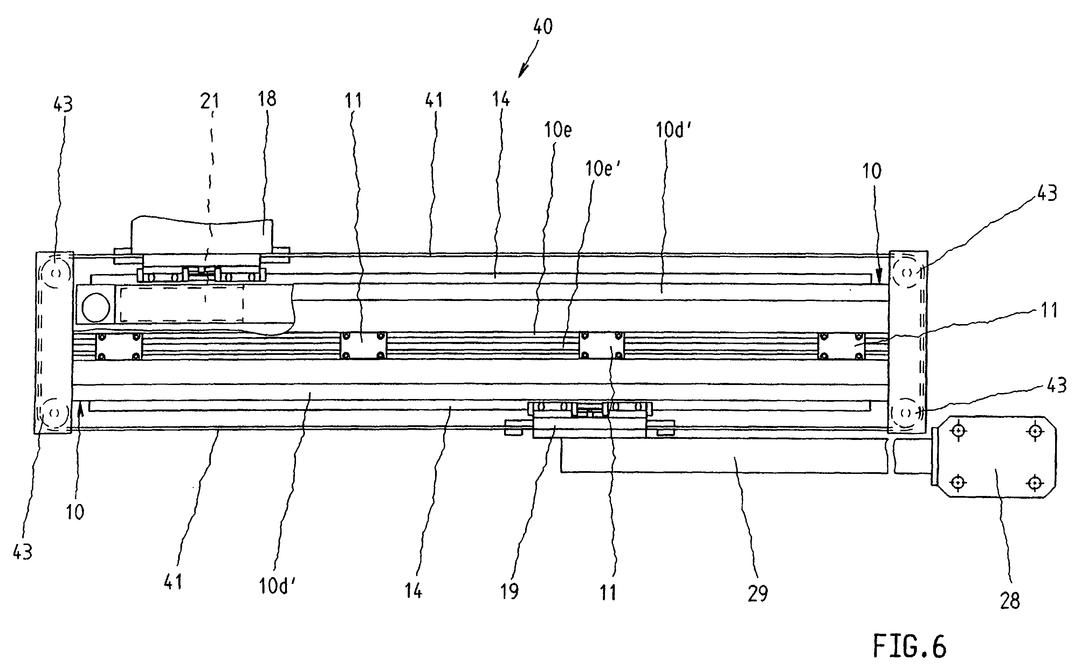

Die beiden Profilschienen 10, die mittels Verbinder 11 verbunden sind, bilden einen Teleskopantrieb 30 bzw. 40 in Fig. 6. Der Teleskopantrieb 30 ist an einer Stelle mit dem stationären Element 18 verbunden und an einer anderen Stelle betätigt er ein bewegliches Element in. Form des Schlittens 19. Beide Antriebseinheiten können unabhängig voneinander oder synchronisiert bewegt werden. Arbeiten beide Antriebseinheiten in dieselbe Richtung, so kann der Greiferarm mit der Summe der Geschwindigkeiten von Schlitten 19 und Profilschiene 10 bewegt werden. Auch hier sind die Verbinder 11 flächengleich mit den Schenkeln 10a angeordnet. Die Antriebsmittel können beliebig ausgestaltet sein, wobei im Ausführungsbeispiel Umlenkrollen 33 für ein flexibles Kraftübertragungselement dargestellt sind.

Fig. 6 zeigt einen ähnlichen Aufbau, wobei der Unterschied gegenüber Fig. 5 darin besteht, daß nur eine Antriebseinheit 21 vorgesehen ist. Diese Antriebseinheit 21 ist im Bereich der als stationäres Element 18 ausgebildeten Aufhängung angeordnet. Der Schlitten 19 steht über ein flexibles Kraftübertragungselement 41 mit der Aufhängung in Verbindung. Als flexibles Kraftübertragungselement können Riemen, Ketten, Seile usw. in Betracht kommen. Durch die Verbindung mit dem stationären Element 18 ergibt sich bei Bewegung für den Schlitten 19 die gleiche Bewegungsrichtung wie für die Profilschiene, so daß diese relativ zur Aufhängung ebenfalls bewegt wird, allerdings mit doppelter Geschwindigkeit.

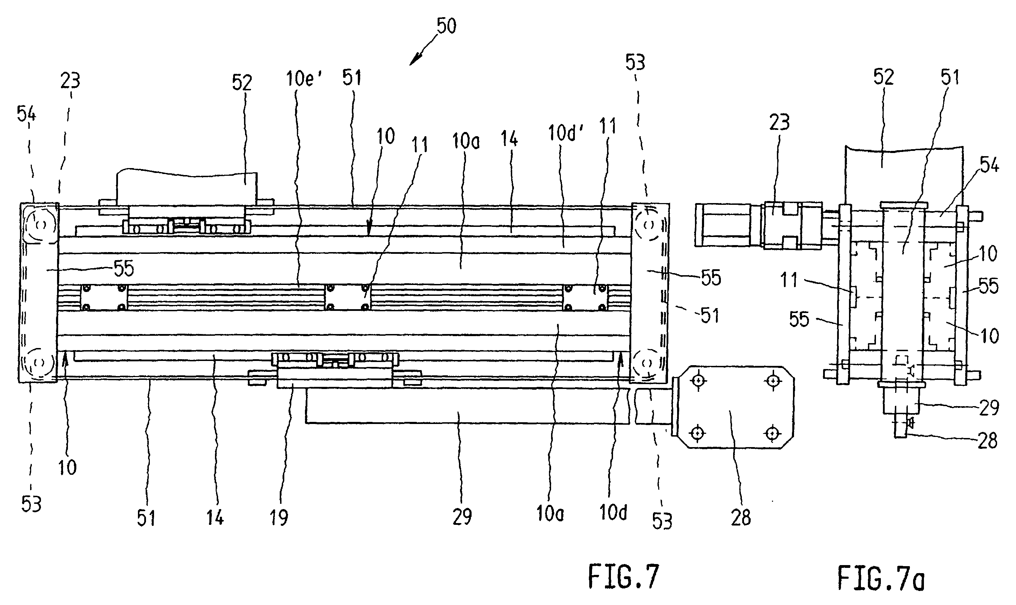

Fig. 7,7a unterscheiden sich von Fig. 6 dadurch, daß das flexible Element nicht nur am Schlitten 19, sondern auch an der Aufhängung 52 befestigt ist. Der Teleskopantrieb 50 besitzt ein flexibles Kraftübertragungselement 51, das über Umlenkrollen 53 geführt wird. Der Antrieb erfolgt über die Umlenkrolle 54 mittels der Antriebseinheit 23. Bei dieser Anordnung wird die Antriebseinheit 23 mit den Profilschienen 10 bewegt. Damit ergibt sich aufgrund des Antriebs über ein flexibles Kraftübertragungselement eine doppelte Geschwindigkeit des Schlittens 19 mit Greiferarm 29, verglichen mit der Geschwindigkeit der Profilschienen 10. Aufgrund der Aussparungen 10d',10e' kann mit Verbindern 11 sowohl an den Schenkelenden 10d als auch an der Unterseite des Profils gearbeitet werden. Die Umlenkrollen 33,43,53 laufen in Lagern und sind in Rollenhaltern 55 (Fig.7) gehalten.

## Patentansprüche

1. U-förmige Profilschiene (10) zum Aufhau eines Handhabungsgeräts (H), insbesondere zur Handhabung von auf einer Spritzgießmaschine zur Verarbeitung von Kunststoffen und anderer plastifizierbarer Massen hergestellten Teilen, mit zwei einen Innenraum (R) begrenzenden Schenkeln (10a), wobei die Profilschiene (10) ein Hohlkammerprofil ist, deren Hohlkammern (10b) und bedarfsweise oberflächige Ausnehmungen (10c) so angeordnet sind, daß zumindest Schenkelenden (10d) der Schenkel (10a) elastisch aufeinander zu und voneinander weg bewegbar sind, sowie mit Befestigungsmöglichkeiten für Führungen (14) des Handhabungsgeräts (H),
**dadurch gekennzeichnet, daß** die Führungen (14) an den Schenkelenden (10d) der Schenkel (10a) befestigbar sind, wobei die Schenkelenden (10d) gegenüber den Schenkeln (10a) elastisch beweglich sind.

2. Profilschiene nach Anspruch 1, **dadurch gekennzeichnet, daß** zwischen dem durch die Hohlkammern (10b) ausgesteiftem Schenkel (10a) und den Schenkelenden (10d) ein elastisches Materialgelenk (10n) ausgebildet ist.

3. Profilschiene nach Anspruch 1, **dadurch gekennzeichnet, daß** außenseitig sowohl an den Schenkelenden (10d) als auch an den im Hinblick auf die U-Form unten liegenden Ecken (10e) der Profilschiene (10) Aussparungen (10d',10e') zum Anschluß weiterer Profilschienen (10) mittels Verbinder (11) vorgesehen sind, die parallel zur Ebene (e-e) der Schenkel (10a) angeordnet sind.

4. Profilschiene nach Anspruch 3, **dadurch gekennzeichnet, daß** die Verbinder (11) flächengleich zu den Außenseiten der Schenkel (10a) der verbindbaren Profilschienen (10) angeordnet sind.

5. Profilschiene nach Anspruch 3, **dadurch gekennzeichnet, daß** zwei mittels Verbinder (11) verbundene Profilschienen (10) einen Teleskopantrieb (30,40) bilden, der an einer Stelle mit einem stationären Element (18) verbindbar ist und an einer anderen Stelle ein bewegliches Element betätigen kann, wobei die wenigstens eine Antriebseinheit (21,22) zwischen den Außenabmessungen der beiden Profilschienen (10) aufgenommen ist.

6. Profilschiene nach Anspruch 5, **dadurch gekennzeichnet, daß** eine Antriebseinheit (21) an der als stationäres Element (18) ausgebildeten Aufhängung anordenbar ist und daß ein als bewegliches Element ausgebildeter Schlitten (19) über ein flexibles Kraftübertragungselement (41) mit der Aufhängung verbindbar ist.

7. Profilschiene nach Anspruch 3, **dadurch gekennzeichnet, daß** zwei mittels Verbinder (11) verbundene Profilschienen (10) einen Teleskopantrieb (50) bilden, der an einer Stelle mit einer stationären Aufhängung (52) verbindbar ist und an einer anderen Stelle einen beweglichen Schlitten (19) betätigen kann, der über ein flexibles Kraftübertragungselement (51) mit der stationären Aufhängung (52) verbindbar ist, wobei das flexible Kraftübertragungselement (51) über Umlenkrollen (53) umgelenkt wird, von denen eine (54) zugleich von der mit der Profilschiene (10) bewegten Antriebseinheit (23) angtreibbar ist.

8. Profilschiene nach Anspruch 2, **dadurch gekennzeichnet, daß** außenseitig sowohl an den Schenkelenden (10d) als auch an den im Hinblick auf die U-Form unten liegenden Ecken (10e) der Profilschiene (10) Aussparungen (10d',10e') zum Anschluß weiterer Profilschienen (10) mittels Verbinder (11) vorgesehen sind, die parallel zur Ebene (e-e) der Schenkel (10a) anordenbar sind.

9. Profilschiene nach Anspruch 8, **dadurch gekennzeichnet, daß** die Verbinder (11) flächengleich zu den Außenseiten der Schenkel (10a) der verbindbaren Profilschienen (10) angeordnet sind.

10. Profilschiene nach Anspruch 8, **dadurch gekennzeichnet, daß** zwei mittels Verbinder (11) verbundene Profilschienen (10) einen Teleskopantrieb (30,40) bilden, der an einer Stelle mit einem stationären Element (18) verbindbar ist und an einer anderen Stelle ein bewegliches Element betätigen kann, wobei die wenigstens eine Antriebseinheit (21,22) zwischen den Außenabmessungen der beiden Profilschienen (10) aufgenommen ist.

11. Profilschiene nach Anspruch 10, **dadurch gekennzeichnet, daß** eine Antriebseinheit (21) an der als stationäres Element (18) ausgebildeten Aufhängung anordenbar ist und daß ein als bewegliches Element ausgebildeter Schlitten (19) über ein flexibles Kraftübertragungselement (41) mit der Aufhängung verbindbar ist.

12. Profilschiene nach Anspruch 8, **dadurch gekennzeichnet, daß** zwei mittels Verbinder (11) verbundene Profilschienen (10) einen Teleskopantrieb (50) bilden, der an einer Stelle mit einer stationären Aufhängung (52) verbindbar ist und an einer anderen Stelle einen beweglichen Schlitten (19) betätigen kann, der über ein flexibles Kraftübertragungselement (51) mit der stationären Aufhängung (52) verbunden ist, wobei das flexible Kraftübertragungselement (51) über Umlenkrollen (53) umgelenkt wird, von denen eine (54) zugleich von der mit der Profilschiene (10) bewegten Antriebseinheit (23) antreibbar ist.

13. Profilschiene nach Anspruch 1, **dadurch gekennzeichnet, daß** die Schenkelenden (10d) symmetrisch zu einer im Innenraum (R) der Profilschiene (10) angeordneten Antriebseinheit (20,21,22) oder zu deren Antriebsachse sind.

## Claims

1. A U-shaped profile rail (10) for constructing a handling device (H) that is used especially for handling parts produced in an injection moulding machine utilised for processing synthetic materials and other plasticizable masses, said rail (10) comprising two legs (10a) bounding an inner space (R) and being a hollow-chambered profile wherein the hollow chambers (10b) and surface recesses (10c), as requisite, are arranged in such a way that at least the leg-ends (10d) of the legs (10a) are moveable towards one another and away from one another in resilient manner, and also comprising mounting means for guide means (14) of the handling device (H),
**characterised in that** the guide means (14) are attachable to the leg-ends (10d) of the legs (10a), the leg-ends (10d) being moveable in resilient manner relative to the legs (10a).

2. A profile rail in accordance with Claim 1, **characterised in that** a resilient material articulated joint (10n) is formed between the leg ends (10d) and the legs (10a) which are stiffened by the hollow chambers (10b).

3. A profile rail in accordance with Claim 1, **characterised in that** recesses (10d', 10e') for the connection of further profile rails (10) by means of connectors (11) are provided on the outer face of the leg ends (10d) and also on the outer faces of the corners (10e) of the profile rail (10) that are located below when viewing the U-shape, said connectors being arranged parallel to the plane (e-e) of the legs (10a).

4. A profile rail in accordance with Claim 3, **characterised in that** the connectors (11) are arranged flush with the outer faces of the legs (10a) of the connectable profile rails (10).

5. A profile rail in accordance with Claim 3, **characterised in that** two profile rails (10) that are connected by means of connectors (11) form a telescopic drive (30, 40) which is connectable to a stationary element (18) at one position and can actuate a moveable element at another position, wherein the at least one drive unit (21, 22) is accommodated between the outer dimensions of the two profile rails (10).

6. A profile rail in accordance with Claim 5, **characterised in that** a drive unit (21) is adapted to be arranged on the suspension which is in the form of a stationary element (18), and **in that** a carriage (19) in the form of a moveable element is connectable to the suspension via a flexible power transmitting element (41).

7. A profile rail in accordance with Claim 3, **characterised in that** two profile rails (10) that are connected by means of connectors (11) form a telescopic drive (50) which is connectable to a stationary suspension (52) at one position and can actuate at another position a moveable carriage (19) which is connectable to the stationary suspension (52) via a flexible power transmitting element (51), wherein the flexible power transmitting element (51) is guided over guide rollers (53) of which one (54) is adapted to be driven at the same time by the drive unit (23) moved with the profile rail (10).

8. A profile rail in accordance with Claim 2, **characterised in that** recesses (10d', 10e') for the connection of further profile rails (10) by means of connectors (11) are provided on the outer face of the leg ends (10d) and also on the outer faces of the corners (10e) of the profile rail (10) that are located below when viewing the U-shape, said connectors being adapted to be arranged parallel to the plane (e-e) of the legs (10a).

9. A profile rail in accordance with Claim 8, **characterised in that** the connectors (11) are arranged to have the same area as the outer faces of the legs (10a) of the connectable profile rails (10).

10. A profile rail in accordance with Claim 8, **characterised in that** two profile rails (10) that are connected by means of connectors (11) form a telescopic drive (30, 40) which is connectable to a stationary element (18) at one position and can actuate a moveable element at another position, wherein the at least one drive unit (21, 22) is accommodated between the outer dimensions of the two profile rails (10).

11. A profile rail in accordance with Claim 10, **characterised in that** a drive unit (21) is adapted to be arranged on the suspension in the form of a stationary element (18), and **in that** a carriage (19) in the form of a moveable element is connectable to the suspension via a flexible power transmitting element (41).

12. A profile rail in accordance with Claim 8, **characterised in that** two profile rails (10) that are connected by means of connectors (11) form a telescopic drive (50) which is connectable to a stationary suspension (52) at one position and can actuate at another position a moveable carriage (19) which is connected to the stationary suspension (52) via a flexible power transmitting element (51), wherein the flexible power transmitting element (51) is guided over guide rollers (53) of which one (54) is adapted to be driven at the same time by the drive unit (23) moved with the profile rail (10).

13. A profile rail in accordance with Claim 1, **characterised in that** the leg ends (10d) are symmetrical relative to the drive unit (20, 21, 22) which is arranged in the inner space (R) of the profile rail (10), or, relative to the drive axis thereof.

## Revendications

1. Rail profilé en U (10) pour la construction d'un appareil manipulateur (H) servant à manipuler des pièces fabriquées sur une machine de moulage par injection pour le traitement de matières plastiques et d'autres masses plastifiables comme des masses céramiques ou des masses pulvérulentes, avec deux branches (10a) délimitant un espace intérieur (R), le rail profilé (10) étant un profilé à chambres creuses, dont les chambres creuses (10b) et si nécessaire des évidements de surface (10c) sont disposés de telle manière qu'au moins les extrémités (10d) des branches (10a) peuvent être écartées et rapprochées élastiquement l'une de l'autre, ainsi qu'avec des possibilités de fixation pour des guidages (14) de l'appareil manipulateur (H),
**caractérisé en ce que** les guidages (14) peuvent être fixés sur les extrémités (10d) des branches (10a), les extrémités de branches (10d) étant mobiles élastiquement par rapport aux branches (10a).

2. Rail profilé selon la revendication 1, **caractérisé en ce qu'**entre la branche (10a) rigidifiée par les chambres creuses (10b) et les extrémités de branches (10d), une articulation de matière élastique (10n) est formée.

3. Rail profilé selon la revendication 1, **caractérisé en ce qu'**à l'extérieur, tant sur les extrémités de branches (10d) que sur les angles (10) du rail profilé (10) situés en bas par rapport à la forme en U, des évidements (10d', 10e') sont prévus pour le raccordement d'autres rails profilés (10) au moyen de connecteurs (11), qui sont disposés parallèlement au plan (e-e) des branches (10a).

4. Rail profilé selon la revendication 3, **caractérisé en ce que** les connecteurs (11) sont placés en affleurement avec les faces extérieures des branches (10a) des rails profilés (10) raccordables.

5. Rail profilé selon la revendication 3, **caractérisé en ce que** deux rails profilés (10) reliés par des connecteurs (11) forment un entraînement télescopique (30, 40) qui peut être relié à un élément stationnaire (18) et peut actionner à un autre endroit un élément mobile, l'unité d'entraînement (21, 22) au nombre d'au moins un étant logée entre les dimensions extérieures des deux rails profilés (10).

6. Rail profilé selon la revendication 5, **caractérisé en ce qu'**une unité d'entraînement (21) peut être placée sur la suspension formée comme élément stationnaire (18) et **en ce qu'**un chariot (19) conformé en élément mobile peut être relié à la suspension par l'intermédiaire d'un élément de transmission de force flexible (41).

7. Rail profilé selon la revendication 3, **caractérisé en ce que** deux rails profilés (10) reliés par des connecteurs (11) forment un entraînement télescopique (50) qui peut être relié à un endroit à une suspension stationnaire (52) et peut actionner à un autre endroit un chariot mobile (19) qui peut être relié à la suspension stationnaire (52) par l'intermédiaire d'un élément de transmission de force flexible (51), l'élément de transmission de force flexible (51) étant dévié sur des rouleaux de renvoi (53) dont l'un (54) peut être entraîné en même temps par l'unité d'entraînement (23) déplacée avec le rail profilé (10).

8. Rail profilé selon la revendication 2, **caractérisé en ce qu'**à l'extérieur, tant sur les extrémités de branches (10d) que sur les angles (10e) du rail profilé (10) situés en bas par rapport à la forme en U, des évidements (10d', 10e') sont prévus pour le raccordement d'autres rails profilés (10) au moyen de connecteurs (11), qui peuvent être placés parallèlement au plan (e-e) des branches (10a).

9. Rail profilé selon la revendication 8, **caractérisé en ce que** les connecteurs (11) sont placés en affleurement avec les faces extérieures des branches (10a) des rails profilés raccordables (10).

10. Rail profilé selon la revendication 8, **caractérisé en ce que** deux rails profilés (10) reliés par des connecteurs (11) forment un entraînement télescopique (30, 40) qui peut être relié à un endroit à un élément stationnaire (18) et peut actionner à un autre endroit un élément mobile, l'unité d'entraînement (21, 22) au nombre d'au moins une étant logée dans les dimensions extérieures des deux rails profilés (10).

11. Rail profilé selon la revendication 10, **caractérisé en ce qu'**une unité d'entraînement (21) peut être placée sur la suspension conformée en élément stationnaire (18) et **en ce qu'**un chariot (19) conformé en élément mobile peut être relié à la suspension par l'intermédiaire d'un élément de transmission de force flexible (41).

12. Rail profilé selon la revendication 8, **caractérisé en ce que** deux rails profilés (10) reliés par des connecteurs (11) forment un entraînement télescopique (50) qui peut être relié à un endroit à une suspension stationnaire (52) et peut actionner à un autre endroit un chariot mobile (19) qui peut être relié à la suspension stationnaire (52) par l'intermédiaire d'un élément de transmission de force flexible (51), l'élément de transmission de force flexible (51) étant dévié sur des rouleaux de renvoi (53) dont l'un (54) peut être entraîné en même temps par l'unité d'entraînement (23) déplacée avec le rail profilé (10).

13. Rail profilé selon la revendication 1, **caractérisé en ce que** les extrémités de branches (10d) sont symétriques par rapport à une unité d'entraînement (20, 21, 22) placée dans l'espace intérieur (R) du rail profilé (10) ou par rapport à son axe d'entraînement.
